# FASCICULE DE BREVET EUROPEEN

(11) **EP 1 360 152 B1**
(45) Date de publication et mention de la délivrance du brevet: **05.10.2005**
(21) Numéro de dépôt: 02704813.1
(22) Date de dépôt: 13.02.2002
(51) Int. Cl.: C03B 37/04, C03B 37/083

(54) **PROCEDE ET DISPOSITIF DE FORMATION DE LAINE MINERALE**
VERFAHREN UND VORRICHTUNG ZUR HERSTELLUNG VON MINERALWOLLE
METHOD AND DEVICE FOR FORMING MINERAL WOOL

(30) Priorité: 14.02.2001 FR 0102024
(43) Date de publication de la demande: 12.11.2003
(73) Titulaire: SAINT-GOBAIN ISOVER, 92400 Courbevoie (FR)
(72) Inventeur: BEAUFILS, Sébastien, F-60190 Cernoy (FR); WAGNER Christophe, ATHEN, GA 30605 (US)
(74) Mandataire: Vignesoult, Serge L. M.
(86) Numéro de dépôt international: PCT/FR2002/000541
(87) Numéro de publication internationale: WO 2002/064520

(56) Documents cités:
- EP-A- 1 142 839
- WO-A-01/11118
- US-A- 4 689 061

## Description

L'invention a trait aux techniques de formation de fibres minérales ou d'autres matériaux thermoplastiques par le procédé de centrifugation interne associée à un étirage par un courant gazeux à haute température. Elle s'applique notamment à la production industrielle de laine de verre destinée à entrer par exemple dans la composition de produits d'isolation thermique et/ou acoustique.

Le procédé de formation de fibres auquel se rapporte l'invention consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz. On nomme " centrifugation interne " ce procédé.

Ce procédé a fait l'objet de nombreux perfectionnements, portant notamment pour certains sur l'assiette de fibrage, pour d'autres sur les moyens de générer le courant annulaire d'étirage, par exemple grâce à des brûleurs de type particulier. Voir notamment EP-B-0 189 354, EP-B-0 519 797, WO-A-97/15532 concernant ce dernier point.

Concernant l'assiette de fibrage le brevet FR-A-1 382 917 (demande du 27 février 1963) décrit un organe de fibrage dont le principe est toujours abondamment utilisé : la matière fondue est amenée dans un panier comportant sur sa paroi verticale des orifices à travers lesquels la matière est projetée sur la paroi d'un corps tournant, solidaire du panier, et comportant un grand nombre d'orifices. On nomme " bande " de l'assiette de fibrage cette paroi. Afin d'obtenir un fibrage de qualité les orifices sont répartis sur des rangées annulaires et les diamètres des orifices sont variables suivant la rangée à laquelle ils appartiennent, ce diamètre allant en diminuant depuis le haut de la bande jusqu'à sa partie inférieure.

On connaît d'ailleurs du document US-A-4 689 061 un centrifugeur comportant une pluralité de zones annulaires, qui sont espacées les unes des autres d'un pas constant ne contenant aucun orifice, et dont la largeur de bande est constante, la taille des orifices allant en augmentant à partir de la zone inférieure vers la zone supérieure.

Dans le cadre de l'invention, on définit le " haut " du centrifugeur comme se comprenant en référence au centrifugeur disposé en position de centrifugation, c'est-à-dire selon un axe (de rotation) sensiblement vertical.

Des améliorations ont été apportées à ce principe de base, comme enseigné notamment dans le brevet FR-A-2 443 436 où des moyens permettent d'obtenir un écoulement laminaire de la matière fondue du haut vers le bas de la bande de l'assiette.

L'invention a alors pour but une amélioration du dispositif et du procédé de fibrage par centrifugation interne de fibres minérales, amélioration visant notamment la qualité des fibres obtenues et l'augmentation du rendement du procédé.

L'invention a tout d'abord pour objet un dispositif de centrifugation interne de fibres minérales comprenant un centrifugeur muni d'une bande périphérique percée d'orifices répartis en une pluralité de zones annulaires disposées les unes au-dessus des autres, en considérant le centrifugeur en position de centrifugation, dont les zones annulaires se superposent les unes aux autres, les orifices étant répartis sur toute la largeur de chaque zone annulaire, et qui comprend au moins deux zones annulaires dont le nombre d'orifices par unité de surface (NS) est différent d'une valeur supérieure ou égale à 5 %, notamment supérieure ou égale à 10 %, et même à 20 %.

Dans un mode de réalisation préféré de l'invention, la zone annulaire comportant le plus grand nombre moyen d'orifices par unité de surface est située sous une autre zone annulaire comportant un nombre moyen d'orifices par unité de surface inférieur, en considérant le centrifugeur en position de fibrage.

On nomme " zone annulaire " une zone de la bande du centrifugeur comprise entre deux plans perpendiculaires de l'axe (de rotation) du centrifugeur. Dans le cadre de l'invention, on définit une telle zone annulaire comme une région où le nombre d'orifices par unité de surface est sensiblement constant sur toute la partie de la périphérie de la bande comprise dans ladite zone annulaire.

On définit le nombre d'orifices par unité de surface, NS, comme le nombre d'orifices compris dans un élément de surface de la zone annulaire, notamment de l'ordre du centimètre carré, rapporté à la surface de cet élément de surface. On considère que le nombre d'orifices par unité de surface est sensiblement constant s'il varie de moins de 0,5 % sur l'ensemble des éléments de surface d'une même zone annulaire. Une zone annulaire peut comprendre un seul orifice par segment vertical mais elle en comprend usuellement plusieurs, notamment entre 4 et 15. On nomme " segment vertical " une partie d'une zone annulaire, limitée sur l'axe vertical par chacun des plans définis ci-dessus, telle qu'on y observe en moyenne qu'un seul orifice sur un axe horizontal en observant le centrifugeur en position de fibrage.

Conventionnellement, on fabrique des fibres minérales avec un centrifugeur où le nombre d'orifices par unité de surface est constant sur toute la hauteur de la bande du centrifugeur. En effet, un centrifugeur conventionnel est percé par électroérosion, avec un peigne composé d'électrodes réparties en ligne où le pas entre électrodes est constant. On procède par perçage simultané des orifices d'une colonne verticale d'orifices, puis on déplace le peigne pour procéder au perçage de la colonne suivante après avoir déplacé le peigne le long de la bande d'une distance correspondant à l'écartement horizontal entre le centre de trous consécutifs.

Cette technique permet un perçage très précis et les variations du nombre d'orifices par unité de surface sont extrêmement faibles, notamment de moins de 1 pour mille.

Un centrifugeur comprend en général entre 2000 et 40000 orifices, notamment pour des diamètres moyens du centrifugeur respectivement compris entre 200 mm et 800 mm.

Il s'est avéré que l'on pouvait augmenter considérablement la qualité des matelas fibreux, notamment ses propriétés mécaniques tout en obtenant une réduction très significative de la consommation énergétique, donc du rendement du procédé de fibrage, en utilisant une dispositif selon l'invention.

Cet effet est particulièrement remarquable car il est connu de diminuer, à tirée constante, la consommation énergétique quand le nombre d'orifices pour une même hauteur de bande augmente car plus on divise la matière fondue, moins il faut d'énergie pour l'étirer. Cependant quand on augmente le nombre d'orifices pour une même hauteur de bande avec un centrifugeur conventionnel la qualité des matelas fibreux produits n'augmente pas, voire à tendance à diminuer, alors qu'avec le dispositif selon l'invention il est possible d'améliorer conjointement les propriétés des produits et le rendement du procédé.

On rappelle que dans le texte on fait référence à un centrifugeur observé dans la position de centrifugation c'est-à-dire avec la bande, comprenant les orifices, disposée de manière sensiblement verticale, autour de l'axe par lequel le matériau fondu est apporté lors du fibrage. Le matériau fondu est apporté par le " haut " du centrifugeur dans cette position. Le fond du centrifugeur est sensiblement horizontal et les zones annulaires sont parallèles à ce fond et se superposent les unes aux autres dans ce mode d'observation.

Un centrifugeur selon l'invention comprend au moins deux zones annulaires superposées, la plus basse ayant un plus grand nombre d'orifices par unité de surface que celle qui est située au-dessus de cette dernière. Dans un mode de réalisation préféré le centrifugeur comprend au moins trois zones annulaires superposées et où chacune de ces zones comprend un nombre d'orifices par unité de surface supérieur à celui de la zone annulaire la plus proche et située au-dessus de la zone annulaire considérée.

Selon un mode de réalisation préféré les orifices de chaque zone annulaire sont regroupés en rangées, avec un diamètre d'orifice (d) sensiblement constant dans chaque zone annulaire et décroissant d'une zone annulaire à une autre, du haut vers le bas de la bande périphérique du centrifugeur en position de centrifugation.

Dans l'invention, il est alors avantageux qu'au moins deux rangées adjacentes aient des orifices de diamètres différents, et plus précisément, que les rangées aient, du haut vers le bas de la bande périphérique, des diamètres d'orifices décroissants (généralement tous les orifices d'une même rangée ont le même diamètre). On peut ainsi prévoir, du haut vers le bas, n rangée(s) d'orifices d'un diamètre donné, puis p rangée(s) d'orifices d'un diamètre moindre, puis t rangée(s) d'orifices d'un diamètre encore réduit, etc... avec n, p et t ≥ 1.

On pourra par exemple avoir ainsi une première zone annulaire, ZA1, constituée de n rangées, une seconde, ZA2, constituée de p rangées, une troisième, ZA3, constituée de t rangées.

En établissant ainsi une sorte de " gradient " décroissant dans la taille d'orifices du haut vers le bas, on a constaté une amélioration dans la qualité du fibrage. On a pu ainsi réduire les différences dans la façon dont les filaments issus des rangées les plus hautes étaient fibrés par rapport à ceux des rangées les plus basses : ce " gradient " permet un développement des filaments primaires en sortie d'orifices et un étirage limitant les croisements des trajectoires, et donc les chocs, entre les fibres en cours d'étirage provenant de rangées d'orifices différentes d'où le gain de qualité observé.

Cette configuration est particulièrement adaptée pour la production de laines minérales peu denses.

Dans certains cas, au contraire, on souhaite favoriser les chocs des fibres entre elles afin d'en réduire la longueur. Ces cas correspondent à la production de laines minérales denses, particulièrement adaptées pour les panneaux utilisés comme éléments de toiture. Dans ces cas on pourra, par exemple, faire alterner la taille des orifices d'une zone à une autre, et on peut ainsi prévoir, du haut vers le bas n rangée(s) d'orifices d'un diamètre donné, puis p rangée(s) d'orifices d'un diamètre supérieur, puis t rangée(s) d'orifices d'un diamètre inférieur à celui des orifices de la rangée située au-dessus, etc...

Avantageusement, les rangées sont espacées les unes des autres d'une distance comprise entre 1 et 2 mm, notamment entre 1,2 et 1,8 mm, avec de préférence un pas de décalage d'une rangée à l'autre compris entre 1 et 2 mm, par exemple entre 1,2 et 1,6 mm.

De préférence, le diamètre (d) d'au moins une partie des orifices du centrifugeur est d'au plus 1,5 ou 1,2 mm, notamment compris entre 1,1 et 0,5 mm, par exemple entre 0,9 et 0,7 mm.

Selon un autre mode de réalisation du dispositif selon l'invention, la distance, D, entre les centres d'orifices voisins les plus proches d'une même zone annulaire est sensiblement constante sur l'ensemble d'une même zone annulaire et cette distance, D, varie d'une zone à une autre d'au moins 3 %, voire d'au moins 5 % et même 10 % ou plus, et est décroissante du haut vers le bas, en considérant le centrifugeur en position de fibrage.

De préférence la distance, D, est comprise entre 0,8 et 3 mm, par exemple entre 1 et 2 mm et même entre 1,4 et 1,8 mm.

Avantageusement, le centrifugeur selon l'invention est choisi de diamètre moyen, noté DM, inférieur ou égal à 800 mm, notamment d'au moins 200 mm.

De préférence le centrifugeur est dépourvu de fond dans sa partie basse (opposée au "haut" du centrifugeur tel que défini ci-dessus)

Suivant le mode de réalisation précédent, le centrifugeur est associé, notamment par assemblage mécanique, avec un panier dans lequel se répand le verre fondu, et qui est entraîné à la même vitesse que le centrifugeur

Selon un mode de réalisation préféré, le dispositif selon l'invention comprend au moins un moyen générant un jet d'étirage gazeux à haute température sous forme d'un brûleur annulaire, notamment selon l'enseignement des brevets EP-A-0 189 354 et EP-A-0 519 797 de la demanderesse.

Avantageusement, le brûleur annulaire est un brûleur tangentiel qui comprend des moyens pour donner au jet d'étirage gazeux une composante tangentielle par rapport au bord horizontal extérieur du centrifugeur, notamment selon l'enseignement du brevet EP-A-0 189 354 de la demanderesse.

On obtient ainsi un angle d'inclinaison du jet d'étirage gazeux par rapport à l'axe du brûleur.

Peut aussi être utilisé un moyen de chauffage " interne " au centrifugeur, du type brûleur interne. Celui-ci peut remplir différents rôles notamment de terminer le conditionnement thermique du verre fondu dans le " panier " du centrifugeur (terme explicité plus bas à l'aide des figures), de maintenir à température appropriée la réserve de verre dans le centrifugeur enfin de refondre en continu les fibres susceptibles de s'être recollées sur les parois externes du centrifugeur.

Le moyen de chauffage " externe " du type inducteur annulaire peut être avantageusement combiné à ce moyen de chauffage interne, il permet également de mieux contrôler la température de la réserve de verre et la refonte des fibres recollées. Il a en fait été constaté que, généralement, pour de faibles tirées il était suffisant d'avoir simplement recours à un brûleur interne, alors que pour des tirées élevées, l'inducteur annulaire s'avérait nécessaire, le brûleur interne venant optionnellement le compléter avantageusement.

L'invention a pour objet un procédé de formation de fibres minérales par centrifugation interne associée à un étirage gazeux à haute température, mettant notamment en oeuvre le dispositif ci-dessus. Le matériau à fibrer est déversé dans un centrifugeur dont la bande périphérique est percée d'orifices répartis en une pluralité de zones annulaires disposées les unes au-dessus des autres en considérant le centrifugeur en position de centrifugation, il comprend au moins deux zones annulaires, ZA1 et ZA2, dont le nombre d'orifices par unité de surface NS1, NS2, est différent d'une valeur supérieure ou égale à 5 %, notamment supérieure ou égale à 10 %, et même à 20 %, et la zone annulaire comportant le plus grand nombre de moyens d'orifices par unité de surface est située sous l'autre zone annulaire en considérant le centrifugeur en position de fibrage.

Le centrifugeur est avantageusement celui dont les caractéristiques ont été décrites plus haut.

L'étirage gazeux à chaud est avantageusement opéré par un brûleur annulaire dont on peut choisir les paramètres de fonctionnement de la façon suivante :
- on peut de préférence régler la température des gaz en sortie de brûleur à au moins 1350°C, notamment au moins 1400°C et par exemple entre 1400 et 1500°C, notamment entre 1430 et 1470°C. On adapte ensuite la température en fonction du type de composition minérale à fibres, suivant notamment son comportement viscosimétrique ,
- avantageusement, on règle aussi la vitesse des gaz émis par le brûleur à au moins 200 m/s, mesurée juste à la sortie des lèvres du brûleur, notamment à des valeurs comprises entre 200 et 295 m/s,
- enfin, on règle de préférence la largeur annulaire des gaz en sortie de brûleur à des valeurs comprises entre 5 mm et 9 mm.

Quand le procédé de l'invention a recours à un moyen pour canaliser les gaz d'étirage à chaud et/ou le matériau éjecté des orifices du centrifugeur sous l'effet de la force centrifuge, il s'agit avantageusement d'une couronne de soufflage de gaz qui est au plus à température ambiante, et sous une pression de gaz d'alimentation comprise entre 0,5 et 2,5.10⁵ Pa, notamment 0,7 à 2.10⁻⁵ Pa.

On peut recourir à un inducteur pour chauffer la zone la plus basse du centrifugeur et éviter ou limiter la création d'un gradient de température sur la hauteur du centrifugeur.

L'invention a également pour objet l'utilisation des fibres minérales obtenues par le dispositif et/ou le procédé décrits plus haut pour fabriquer des produits d'isolation thermique et/ou acoustique.

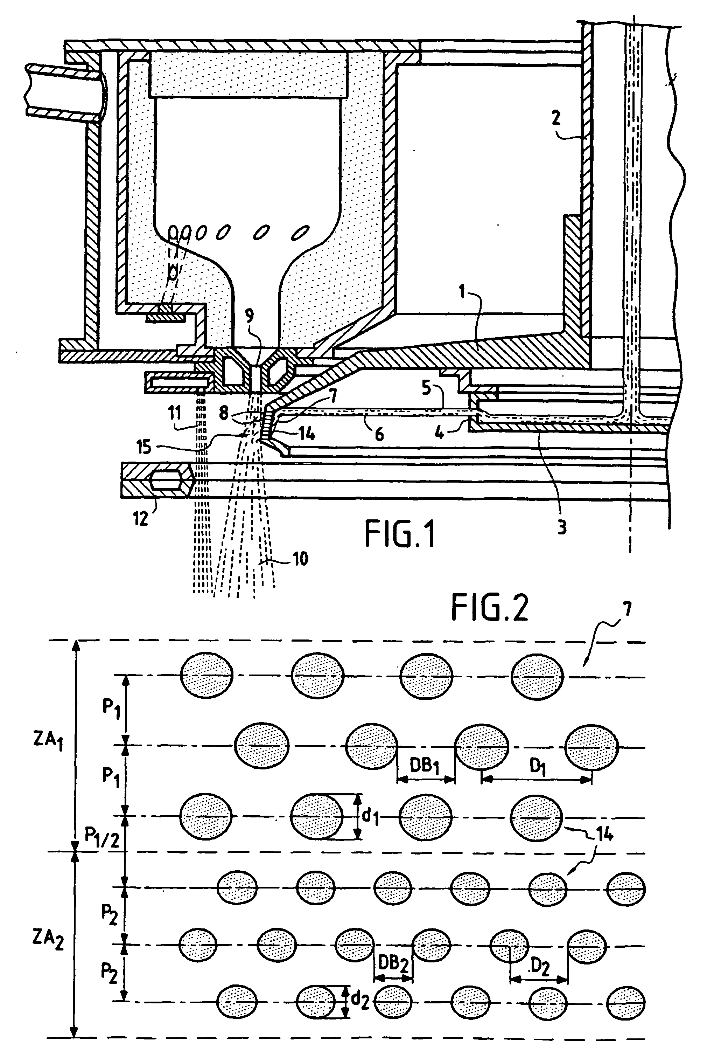

L'invention sera détaillée ci-après à l'aide d'exemples non limitatifs illustrés par les figures suivantes :
→ **Figure 1 :** une vue partielle du dispositif de centrifugation selon l'invention,
→ **Figure 2 :** une vue partielle du centrifugeur selon l'invention.

La **figure 1** représente donc une vue partielle d'un système de centrifugeur interne à étirage par gaz chaud adapté à partir de ceux connus de l'art antérieur et décrits notamment, dans les brevets EP-A-91 866, EP-A-189 354 et EP-A-519 797, auxquels on se rapportera pour plus de détails sur la généralité de ce mode de fibrage.

Le système comprend un centrifugeur 1 fixé sur un arbre 2. L'arbre et le centrifugeur sont animés d'un mouvement de rotation rapide au moyen d'un moteur non représenté. L'arbre 2 est creux et le verre à l'état fondu s'écoule depuis les moyens d'alimentation non représentés dans l'arbre 2 jusqu'au " panier " 3 dans lequel se répand le verre fondu. Le panier 3 est également entraîné en rotation de sorte que le verre fondu est projeté sur la paroi périphérique 4 qui est percée d'orifices et, de là, sous forme de filets volumineux 6 sur la paroi périphérique 7, usuellement nommée " bande ", du centrifugeur 1, qui vont former sur cette paroi une réserve permanente de verre fondu venant alimenter les orifices circulaires 14 percés dans ladite paroi. Cette paroi 7 est inclinée d'environ 5 à 10° par rapport à la verticale. De très nombreux orifices circulaires 14 disposés en rangées, sortent des cônes d'écoulement 8 se prolongeant en avant-fibres 15, projetées dans le courant gazeux annulaire émis par le brûleur 9. Sous l'action de ce courant, ces avant-fibres s'étirent, leur portion terminale générant des fibres 10 discontinues ensuite collectées sous le centrifugeur. Le système comporte en outre une couronne de soufflage 11 qui crée une " nappe gazeuse " entourant le courant gazeux annulaire généré par le brûleur 9. On utilise également optionnellement une couronne d'induction 12 sous le centrifugeur 1 et/ou un brûleur interne non représenté.

Dans les conditions standards, l'écartement entre les lignes passant par le centre de deux rangées parallèles d'orifices, nommé pas de décalage, est constant sur toute la hauteur de la bande. Dans ces conditions, la distance entre les centres des orifices voisins d'une même rangée est également constante.

Donc, dans un centrifugeur standard le nombre d'orifices par unité de surface est constant sur l'ensemble de la surface de la bande.

Dans des conditions standards de fonctionnement, un tel dispositif permet d'obtenir des fibres de diamètre moyen d'au moins 2 µm, notamment de l'ordre de 3 jusqu'à 12 µm.

L'invention a donc consisté à optimiser le procédé de fibrage en modifiant la répartition des orifices sur la bande 7 du centrifugeur.

L'adaptation la plus significative faite dans le cadre de l'invention apparaît sur la figure 2.

La figure 2 représente une vue partielle de face de la bande 7 du centrifugeur 1, où sont représentés de manière ombrée les orifices 14 percés dans ladite bande.

Sur cette figure on représente deux zones annulaires superposées ZA1 et ZA2, ZA2 étant sous ZA1 quand on observe le dispositif en position de fibrage. Dans le cas représenté, chacune de ces zones annulaires comprend trois rangées d'orifices circulaires 14. Dans la zone annulaire ZA1 les rangées présentent un pas de décalage P1, les orifices un diamètre d1, la distance D1 sépare les centres des orifices 14 les plus proches, la distance entre bords les plus proches d'orifices voisins vaut DB1, et le nombre d'orifices par unité de surface vaut NS1 dans la zone ZA1. Dans la zone annulaire ZA2, ces paramètres sont respectivement P2, d2, D2, DB2 et NS2.

Le pas de décalage entre ZA1 et ZA2 est noté P1/2.

On note que d'une part d2 est inférieur à d1, et d'autre part que P2 et D2 sont respectivement inférieurs à P1 et D1. En conséquence, NS2 est très supérieur à NS1.

Cette représentation n'est nullement limitative et une bande 7 d'un centrifugeur 1 peut comprendre plus de deux zones annulaires, chacune desdites zones comprenant au moins une série d'orifices 14.

Afin d'illustrer l'intérêt du centrifugeur selon l'invention des essais comparatifs ont été effectués d'une part avec un centrifugeur standard, d'autre part avec un centrifugeur selon l'invention. Les caractéristiques des deux centrifugeurs qui ont été choisis pour avoir le même diamètre moyen, DM, et la même surface de bande, soit une hauteur de bande percée identique, sont présentées dans le tableau 1. Chacun de ces centrifugeurs comprend trois zones annulaires constituées chacune de plusieurs rangées d'orifices de diamètre et d'écartements constants dans une rangée.

Le nombre d'orifices par rangée est noté NO, et le nombre d'orifices par unité de surface, NS, se calcule selon : NS = NO/(π.D.P). Il est exprimé ici en nombre d'orifices par mm².

On constate que le nombre d'orifices par unité de surface est constant pour le centrifugeur standard. Dans le cas du centrifugeur selon l'invention, il est variable par zone annulaire et ce nombre, NS, est inférieur à celui du centrifugeur standard pour la zone annulaire la plus haute, ZA1, puis supérieur à celui du centrifugeur standard pour les autres zones annulaires, ZA2 et ZA3. On note que pour le centrifugeur selon l'invention le nombre d'orifices par unité de surface est croissant par zone, du haut vers le bas du centrifugeur, d'environ 25 à 30 % d'une zone à une autre.

Les deux centrifugeurs ont été fabriqués à partir du même alliage, connu sous la référence SG30, produit notamment par la société SEVA. Le centrifugeur standard a été percé par la technique d'électroérosion décrite ci-dessus, alors que les orifices du centrifugeur selon l'invention ont été percés par bombardement électronique. Un perçage par laser est également envisageable.

Des produits ont été fabriqués avec chacun des centrifugeurs dans des conditions de tirées équivalentes.

Les types de produits fabriqués, les conditions de fibrage et les propriétés mécaniques mesurées sur les produits obtenus sont reportés dans le tableau 2.

La finesse des fibres est déterminée par la valeur de leur micronaire (F) sous 5 g. La mesure du micronaire appelée aussi " indice de finesse " rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est normalisée pour la mesure de fibres de coton (DIN 53941 ou ASTM D 1448) et elle utilise un appareil dit " appareil micronaire ". Dans le cas présent on s'assure que les produits ont le même indice de finesse ce qui ici se traduit par un même débit (en l/mn).

Les produits obtenus sont de même type, c'est-à-dire de même épaisseur nominale, de même masse volumique. Pour les obtenir, on a utilisé un même brûleur, dans ce cas un brûleur tangentiel, avec une inclinaison du jet gazeux d'environ 10°. Les paniers utilisés sont de même géométrie. La pression du brûleur est exprimé en mm de colonne d'eau (mm CE).

Ces produits sont tous imprégnés du même liant formophénolique, avec 4,7 % du liant par rapport au poids de fibres.

On compare l'énergie nécessaire pour obtenir des produits du même type, c'est-à-dire notamment la quantité d'air et de gaz apportés pour la combustion. Le débit d'air ou de gaz est exprimé en normo mètre cube par heure (Nm³/h).

On compare également les propriétés mesurées sur les produits du même type avec chacun des centrifugeurs.

La reprise d'épaisseur est définie comme le rapport (en %) entre l'épaisseur après essai de compression et l'épaisseur nominale. Il faut noter que l'épaisseur du produit fabriqué avant essai de compression, est supérieure à l'épaisseur nominale. Dans le cas des essais mentionnés, l'épaisseur du produit fabriqué est de 144 mm pour une épaisseur nominale de 80 mm.

On déduit donc du tableau 2 que l'épaisseur du matelas fibreux déchargé après 12 jours d'essai de compression est d'environ 90 % de l'épaisseur initiale (épaisseur de fabrication) du matelas fibreux avec le centrifugeur selon l'invention, et d'environ 80 % de l'épaisseur initiale avec un centrifugeur standard.

Pour procéder à l'essai de compression ci-dessus on prépare des panneaux de matelas fibreux après fabrication que l'on charge pour obtenir un taux de compression de 8/1, soit dans le cas mentionné une épaisseur comprimée d'environ 18 mm. Après le temps de compression mentionné (12 jours, 1 mois) on décharge les panneaux (4 panneaux sont testés par temps de compression) et on détermine l'épaisseur moyenne après essai de compression.

La "résistance traction est déterminée à partir d'une éprouvette en forme d'anneau découpée avec un emporte-pièce dans un matelas de produit fibreux. La " résistance traction " s'exprime comme la limite de la force de traction (force de rupture de l'anneau écarté par deux mandrins circulaires et parallèles de 12,5 mm de rayon, avec une vitesse de charge de 300 mm/min) rapportée à la masse de l'éprouvette et s'exprime en gf/g.

L'éprouvette, chargée en début d'essai, est un anneau torrique sensiblement elliptique de 122 x 76 mm de grand et petit axes et de 26 mm d'épaisseur du torre. 15 éprouvettes sont testées par produit. Cet essai se réfère aux normes BIFT 5012-76 et ASTM C 681-76.

La résistance traction est mesurée sur le produit après fabrication et, afin d'estimer l'aptitude au vieillissement du produit après un essai d'autoclavage. La durée de l'essai d'autoclavage est de 15 minutes, à une température de 107°C, une pression de 0.8 bar et 100 % d'humidité.

Du tableau 2 on constate que pour un produit du même type on obtient des propriétés mécaniques nettement améliorées avec le dispositif selon l'invention comparé au dispositif standard et conjointement l'énergie nécessaire pour produire les fibres est significativement réduite.

En effet la pression du brûleur est moindre, inférieure d'environ 20 % avec le centrifugeur selon l'invention comparé aux résultats avec le centrifugeur standard. Conjointement les débits de fluide, air et gaz sont inférieurs relativement de 10 % environ. Le rendement énergétique du procédé est donc très avantageusement augmenté avec le centrifugeur selon l'invention.

L'amélioration des propriétés mécaniques porte à la fois sur la reprise d'épaisseur, qui est d'environ 10 % supérieure avec le centrifugeur selon l'invention comparé aux produits obtenus avec un centrifugeur standard, et également sur la résistance traction qui est améliorée d'environ 20 %.

Outre ces résultats remarquables, on a pu constater que, de manière inattendue, l'augmentation du nombre d'orifices du centrifugeur n'a pas d'incidence négative sur la durée de vie du centrifugeur, quand celui-ci est réalisé selon l'enseignement de l'invention.

Dans les conditions de fibrage définies dans le tableau 2, la durée de vie du centrifugeur selon l'invention a été d'environ 370 heures et celle du centrifugeur standard de 300 heures environ.

De même on constate que la qualité des produits ne varie pas significativement avec le temps d'utilisation en fibrage d'une assiette alors que l'on pourrait craindre que l'augmentation du nombre de trous par unité de surface ne conduise à un vieillissement accéléré du centrifugeur accompagné d'une dégradation rapide des propriétés du produit au cours du fibrage avec une même assiette.

On note que la configuration décrite pour le centrifugeur selon l'invention dans le tableau 1 est particulièrement avantageuse d'un point de vue géométrique. En effet, tout en augmentant le nombre d'orifices dans le centrifugeur, les inventeurs ont su définir une configuration géométrique où l'écartement entre bords d'orifices, DB1, est augmenté par rapport à celui du centrifugeur standard dans la zone annulaire, ZA1, où les orifices présentent le plus gros diamètre, D1, et où la corrosion et l'érosion sont les plus actives. Dans la zone annulaire médiane, ZA2, l'écartement entre bords d'orifices, DB2, est identique dans les deux configurations, et dans la zone annulaire, ZA3, de diamètre inférieur, D3, la configuration choisie permet de diminuer la distance entre bords d'orifices, DB3, ce qui n'est pas dommageable car la corrosion et l'érosion y sont moindres. On préserve ainsi, très avantageusement, les qualités mécaniques du centrifugeur selon l'invention et on peut maintenir, voir augmenter sa durée de vie par rapport à un centrifugeur standard, tout en augmentant considérablement le nombre d'orifices.

L'invention ne se limite pas à ces types de réalisation et doit être interprétée de façon non limitative, et englobant tout dispositif de centrifugation interne de fibres minérales comprenant un centrifugeur muni d'une bande périphérique percée d'orifices répartis en une pluralité de zones annulaires disposées les unes au-dessus des autres, en considérant le centrifugeur en position de centrifugation, avec qui au moins deux zones annulaires dont le nombre d'orifices par unité de surface (NS) d'une valeur supérieure ou égale à 5 %, notamment supérieure ou égale à 10 %, et même à 20 %, ainsi que tout procédé utilisant un tel dispositif de centrifugation interne.

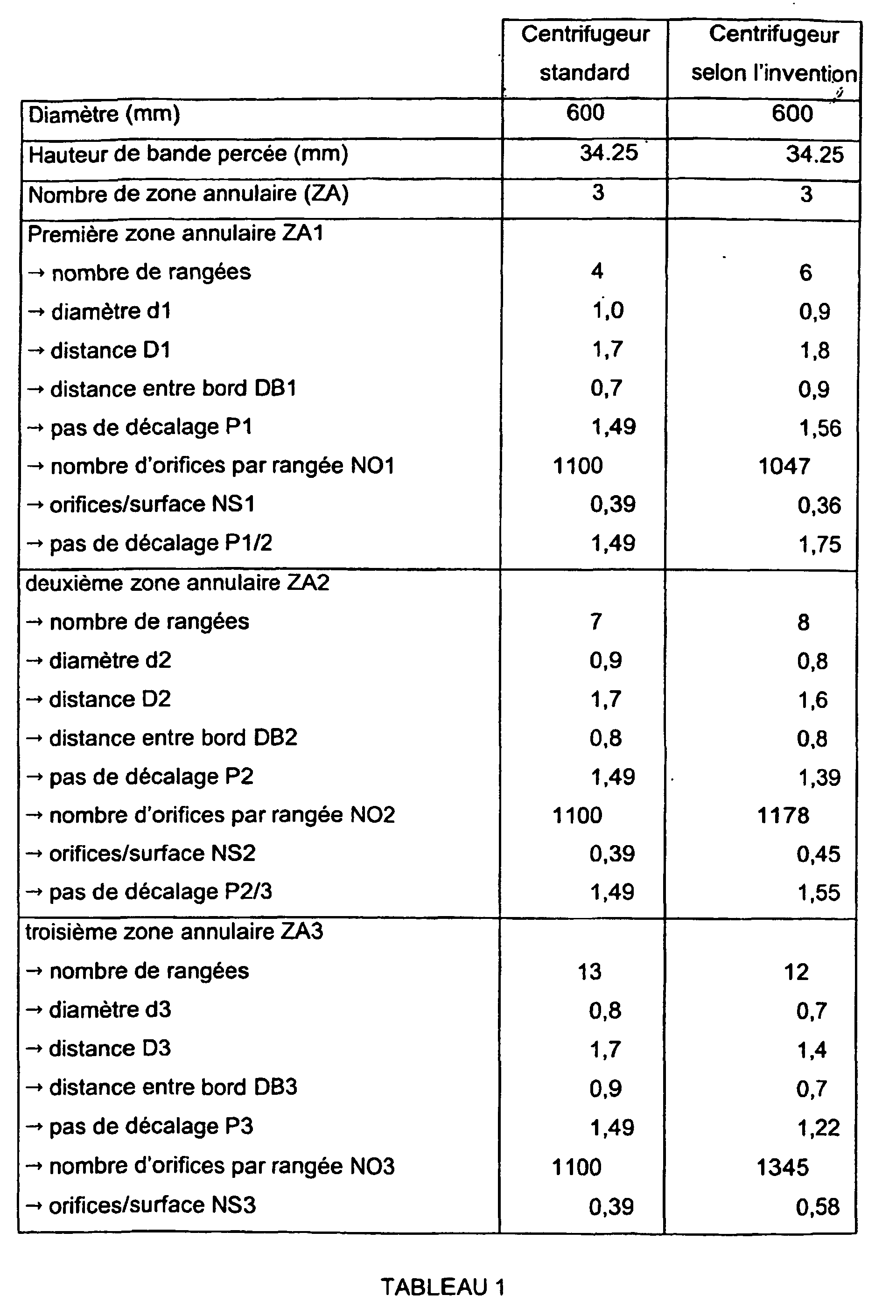

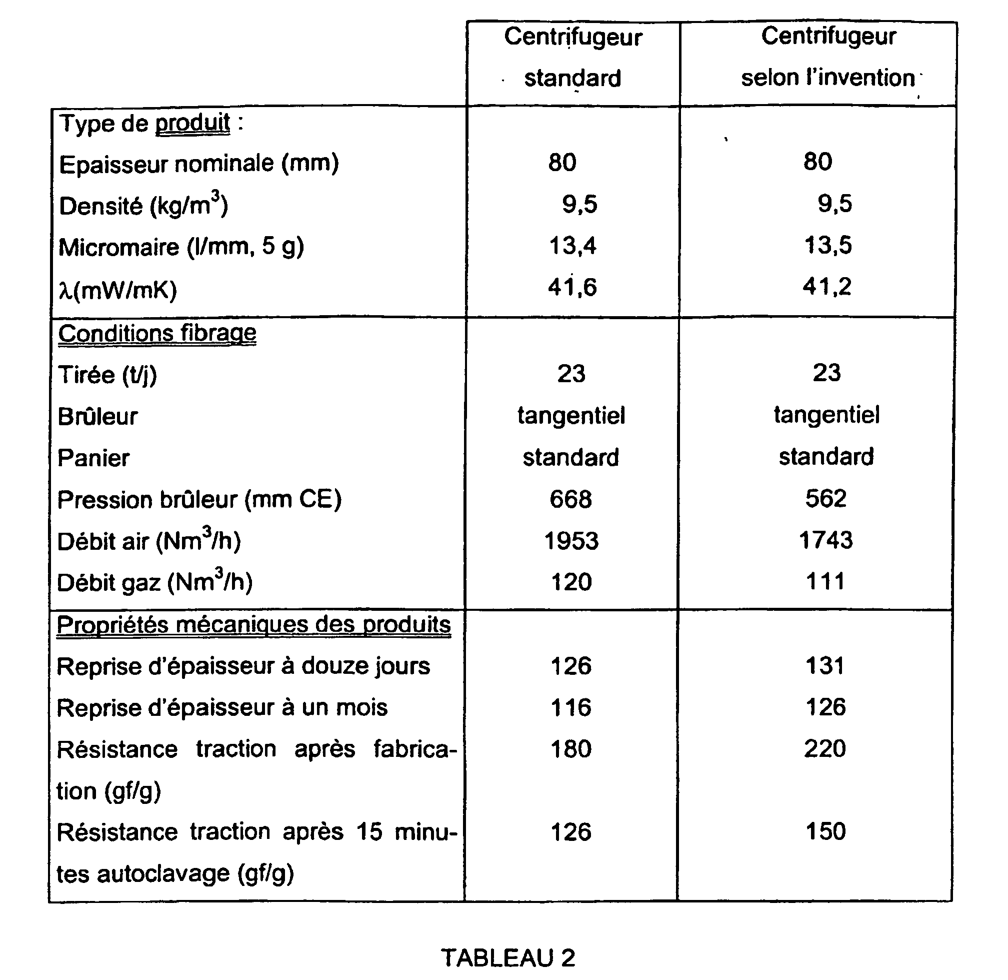

## Revendications

1. Dispositif de centrifugation interne de fibres minérales comprenant un centrifugeur (1) muni d'une bande périphérique (7) percée d'orifices (14) répartis en une pluralité de zones annulaires (ZA) disposées les unes au-dessus des autres en considérant le centrifugeur en position de centrifugation, **caractérisé en ce que** les zones annulaires se superposent les unes aux autres, les orifices étant répartis sur toute la largeur de chaque zone annulaire, et **en ce qu'**il comprend au moins deux zones annulaires (ZA1,ZA2) dont le nombre d'orifices par unité de surface (NS1, NS2) est différent d'une valeur supérieure ou égale à 5 %, notamment supérieure ou égale à 10 %, et même à 20 %.

2. Dispositif selon la revendication 1, **caractérisé en ce que** la zone annulaire comportant le plus grand nombre moyen d'orifices par unité de surface est située sous une autre zone annulaire comportant un nombre moyen d'orifices par unité de surface inférieur, en considérant le centrifugeur en position de fibrage.

3. Dispositif selon l'une des revendications 1 ou 2, **caractérisé en ce que** les orifices (14) de chaque zone annulaire sont regroupés en rangées, avec un diamètre d'orifice (d) sensiblement constant dans chaque zone annulaire et décroissant d'une zone annulaire à une autre, du haut vers le bas de la bande périphérique du centrifugeur (7) en position de centrifugation.

4. Dispositif selon la revendication 3, **caractérisé en ce que** les rangées sont espacées les unes des autres d'une distance comprise entre 1 et 2 mm, notamment entre 1,2 et 1,8 mm, avec de préférence un pas de décalage d'une rangée à l'autre compris entre 1 et 2 m, par exemple entre 1,2 et 1,6 mm.

5. Dispositif selon l'une des revendications précédentes, **caractérisé en ce que** le diamètre (d) d'au moins une partie des orifices (14) du centrifugeur (1) est d'au plus 1,5 ou 1,2 mm, notamment compris entre 1,1 et 0,5 mm, par exemple entre 0,9 et 0,7 mm.

6. Dispositif selon l'une quelconque des revendications précédentes, **caractérisé en ce que** la distance (D) entre les centres des orifices les plus proches voisins d'une même zone annulaire (ZA) est sensiblement constante sur l'ensemble d'une même zone annulaire et **en ce que** cette distance (D) varie d'une zone à une autre d'au moins 3 %, voire d'au moins 5 %, et même 10 % ou plus, et est décroissante du haut vers le bas, en considérant le centrifugeur (1) en position de fibrage, avec notamment une distance D comprise entre 0,8 et 3 mm, par exemple entre 1 et 2 mm et même entre 1,4 et 1,8 mm.

7. Dispositif selon l'une des revendications précédentes, **caractérisé en ce que** le centrifugeur (1) présente un diamètre moyen (DM) inférieur ou égal à 800 mm, notamment d'au moins 200 mm.

8. Dispositif selon l'une des revendications précédentes **caractérisé en ce que** le centrifugeur (1) est associé à un panier (3) dans lequel se répand le verre fondu.

9. Dispositif selon l'une des revendications précédentes, **caractérisé en ce qu'**il comprend au moins un moyen générant un jet d'étirage gazeux à haute température sous forme d'un brûleur annulaire (9).

10. Dispositif selon la revendication 9, **caractérisé en ce que** le brûleur annulaire (9) est un brûleur tangentiel qui comprend des moyens pour donner au jet d'étirage gazeux une composante tangentielle par rapport au bord extérieur horizontal du centrifugeur.

11. Centrifugeur (1) muni d'une bande périphérique (7) percée d'orifices (14) répartis en une pluralité de zones annulaires (ZA) disposées les unes au-dessus des autres en considérant le contrifugeur en position de centrifugation, **caractérisé en ce que** les zones annulaires se superposent les unes aux autres, les orifices étant répartis sur toute la largeur de chaque zone annulaire, et **en ce que** le centrifugeur (1) comprend au moins deux zones annulaires (ZA1, ZA2) dont le nombre d'orifices par unité de surface (NS1, NS2) est différent d'une valeur supérieure ou égale à 5 %, notamment supérieure ou égale à 10%, et même à 20%.

12. Le centrifugeur (1) selon la revendication 11 **caractérisé en ce qu'**il est dépourvu de fond.

13. Procédé de formation de fibres minérales par centrifugation interne associée à un étirage gazeux à haute température, où le matériau à fibrer est déversé dans un centrifugeur (1) dont la bande périphérique est percée d'orifices (14) répartis en une pluralité de zones annulaires (ZA) disposées les unes au-dessus des autres en considérant le centrifugeur en position de centrifugation, **caractérisé en ce qu'**il met en oeuvre le dispositif selon l'une des revendications 1 à 10 .

14. Utilisation des fibres minérales obtenues par le dispositif selon l'une des revendications 1 à 10 et/ou par le procédé suivant la revendication 13 pour fabriquer des produits d'isolation thermique et/ou acoustique.

## Patentansprüche

1. Vorrichtung zum Innenzentrifugieren von Mineralfasern, die eine Zentrifuge (1) umfasst, die mit einem umfänglichen Mantel (7) versehen ist, der mit Öffnungen (14) durchbohrt ist, die auf eine Vielzahl ringförmiger Bereiche (ZA) verteilt sind, die übereinander angeordnet sind, wobei die Zentrifuge in Zentrifugierposition betrachtet wird, **dadurch gekennzeichnet, dass** die ringförmigen Bereiche sich übereinander befinden und die Öffnungen über die gesamte Breite eines jeden ringförmigen Bereichs verteilt sind, **und dass** sie mindestens zwei ringförmige Bereiche (ZA1, ZA2) umfasst, deren Anzahl Öffnungen pro Flächeneinheit (NS1, N2) sich um einen Wert von mehr als oder gleich 5 %, insbesondere mehr als oder gleich 10 %, und sogar als 20 % unterscheiden.

2. Vorrichtung nach Anspruch 1, **dadurch gekennzeichnet, dass** der ringförmige Bereich, der die größte mittlere Anzahl Öffnungen pro Flächeneinheit enthält, sich unter einem anderen ringförmigen Bereich befindet, der eine kleinere mittlere Anzahl Öffnungen pro Flächeneinheit enthält, wobei die Zentrifuge in Spinnposition betrachtet wird.

3. Vorrichtung nach Anspruch 1 oder 2, **dadurch gekennzeichnet, dass** die Öffnungen (14) eines jeden ringförmigen Bereichs zu Reihen zusammengefaßt sind, wobei der Öffnungsdurchmesser (d) in jedem ringförmigen Bereich im Wesentlichen gleich ist und von einem ringförmigen Bereich zum nächsten von oben nach unten des umfänglichen Mantels (7) der Zentrifuge in Zentrifugierposition abnimmt.

4. Vorrichtung nach Anspruch 3, **dadurch gekennzeichnet, dass** die Öffnungsreihen mit einer Entfernung voneinander beabstandet sind, die 1 bis 2 mm und insbesondere zwischen 1,2 und 1,8 mm beträgt, wobei vorzugsweise ein Versatz von einer Reihe zur nächsten von 1 bis 2 mm, beispielsweise zwischen 1,2 und 1,6 mm, herrscht.

5. Vorrichtung nach einem der vorhergehenden Ansprüche, **dadurch gekennzeichnet, dass** der Durchmesser (d) wenigstens eines Teils der Öffnungen (14) der Zentrifuge (1) höchstens 1,5 oder 1,2 mm, insbesondere 1,1 bis 0,5 mm, und beispielsweise zwischen 0,9 und 0,7 mm beträgt.

6. Vorrichtung nach einem der vorhergehenden Ansprüche, **dadurch gekennzeichnet, dass** der Abstand (D) zwischen den Mitten der am engsten benachbarten Öffnungen ein und desselben ringförmigen Bereichs (ZA) über die Gesamtheit ein und desselben ringförmigen Bereichs im Wesentlichen konstant ist, **und dass** dieser Abstand (D) von einem Bereich zum nächsten um mindestens 3 %, selbst mindestens 5 %, und sogar 10 % oder mehr variiert und von oben nach unten mit insbesondere einem Abstand D von 0,8 bis 3 mm, beispielsweise zwischen 1 und 2 mm, und sogar zwischen 1,4 und 1,8 mm abnimmt, wobei die Zentrifuge (1) in Spinnposition betrachtet wird.

7. Vorrichtung nach einem der vorhergehenden Ansprüche, **dadurch gekennzeichnet, dass** der mittlere Durchmesser (DM) der Zentrifuge (1) weniger als oder gleich 800 mm und insbesondere mindestens 200 mm beträgt.

8. Vorrichtung nach einem der vorhergehenden Ansprüche, **dadurch gekennzeichnet, dass** die Zentrifuge (1) mit einer Trommel (3) verbunden ist, in welcher sich die Glasschmelze ausdehnt.

9. Vorrichtung nach einem der vorhergehenden Ansprüche, **dadurch gekennzeichnet, dass** sie mindestens ein Mittel in Form eines Ringbrenners (9) umfasst, das einen Gasziehstrahl mit hoher Temperatur erzeugt.

10. Vorrichtung nach Anspruch 9, **dadurch gekennzeichnet, dass** der Ringbrenner (9) ein Tangentialbrenner ist, der Mittel enthält, um dem Gasziehstrahl eine in Bezug auf den horizontalen äußeren Rand der Zentrifuge tangentiale Komponente zu verleihen.

11. Zentrifuge (1), die mit einem umfänglichen Mantel (7) versehen ist, der mit Öffnungen (14) durchbohrt ist, die auf eine Vielzahl ringförmiger Bereiche (ZA) verteilt sind, die übereinander angeordnet sind, wobei die Zentrifuge in Zentrifugierposition betrachtet wird, **dadurch gekennzeichnet, dass** die ringförmigen Bereiche sich übereinander befinden und die Öffnungen über die gesamte Breite eines jeden ringförmigen Bereichs verteilt sind, **und dass** die Zentrifuge (1) mindestens zwei ringförmige Bereiche (ZA1, ZA2) umfasst, deren Anzahl Öffnungen pro Flächeneinheit (NS1, N2) sich um einen Wert von mehr als oder gleich 5 %, insbesondere mehr als oder gleich 10 %, und sogar als 20 % unterscheiden.

12. Zentrifuge (1) nach Anspruch 11, **dadurch gekennzeichnet, dass** sie keinen Boden hat.

13. Verfahren zur Herstellung von Mineralfasern durch mit einem bei hoher Temperatur stattfindenden Gasziehvorgang verbundenes Innenzentrifugieren, wobei das zu verspinnende Material in eine Zentrifuge (1) gefüllt wird, deren umfänglicher Mantel mit Öffnungen (14) durchbohrt ist, die auf eine Vielzahl ringförmiger Bereiche (ZA) verteilt sind, die übereinander angeordnet sind, wobei die Zentrifuge in Zentrifugierposition betrachtet wird, **dadurch gekennzeichnet, dass** es in der Vorrichtung nach einem der Ansprüche 1 bis 10 durchgeführt wird.

14. Verwendung der durch die Vorrichtung nach einem der Ansprüche 1 bis 10 und/oder das Verfahren nach Anspruch 13 erhaltenen Mineralfasern zur Herstellung von wärmedämmenden und/oder schalldämmenden Erzeugnissen.

## Claims

1. Device for internal centrifugation of mineral fibers, including a centrifuge (1) equipped with a peripheral band (7) perforated with orifices (14) distributed in a plurality of annular zones (ZA) arranged on top of each other, assuming that the centrifuge is in centrifugation position, **characterized in that** the annular zones are superimposed on each other, the orifices being distributed over all width of each annular zone, and **in that** it includes at least two annular zones (ZA2, ZA2) whose number of orifices per unit of surface area (NS1, NS2) differs by a value greater than or equal to 5%, particularly greater than or equal to 10%, and even 20%.

2. Device according to claim 1, **characterized in that** the annular zone containing the greatest number of orifices per unit of surface area is located below another annular zone containing a lower average number of orifices per unit of surface area, assuming that the centrifuge is in fiberization position.

3. Device according to claims 1 or 2, **characterized in that** the orifices (14) of each annular zone are grouped in rows, with a diameter of orifice (d) substantially constant in each annular zone and decreasing from one annular zone to another, from the top to the bottom of the peripheral band of the centrifuge (7) in centrifugation position.

4. Device according to claim 3, **characterized in that** the rows are spaced from each other at a distance between 1 and 2 mm, in particular between 1.2 and 1.8 mm, preferably with a pitch from one row to the next of between 1 and 2 mm, for example between 1.2 and 1.6 mm.

5. Device according to one of the preceding claims, **characterized in that** the diameter (d) of at least a part of the orifices (14) of the centrifuge (1) is at most 1.5 or 1.2 mm, in particular between 1.1 and 0.5 mm, for example between 0.9 and 0.7 mm.

6. Device according to any of the preceding claims, **characterized in that** the distance (D) between the centers of the closest orifices neighboring the same annular zone (ZA) is substantially constant over an entire annular zone **and in that** this distance (D) varies from one zone to another by at least 3%, or even at least 5%, and even 10% or more, and is decreasing from the top to the bottom, assuming that the centrifuge (1) is in fiberization position, with in particular a distance D between 0.8 and 3 mm, for example between 1 and 2 mm and even between 1.4 and 1.8 mm.

7. Device according to one of the preceding claims, **characterized in that** the centrifuge (1) presents an average diameter (DM) less than or equal to 800 mm, in particular by at least 200 mm.

8. Device according to any of the preceding claims, **characterized in that** the centrifuge (1) is joined with a basket (3) in which the molten glass spreads.

9. Device according to one of the preceding claims, **characterized in that** it includes at least one mechanism of generating a high-temperature gaseous drawing jet in the form of an annular burner (9).

10. Device according to claim 9, **characterized in that** the annular burner (9) is a tangential burner which includes a mechanism of giving the gaseous drawing jet a tangential component in relation to the external horizontal edge of the centrifuge.

11. Centrifuge (1) equipped with a peripheral band (7) perforated with orifices (14) distributed in a plurality of annular zones (ZA) arranged on top of each other, assuming that the centrifuge is in centrifugation position, **characterized in that** the annular zones are superimposed on each other, the orifices being distributed over all width of each annular zone, and **in that** the centrifuge (1) includes at least two annular zones (ZA2, ZA2) whose number of orifices per unit of surface area (NS1, NS2) differs by a value greater than or equal to 5%, particularly greater than or equal to 10%, and even 20%.

12. The centrifuge (1) of claim 11 where it is devoided of a bottom.

13. Process of formation of mineral fibers by internal centrifugation associated with gaseous drawing at high temperature, in particular implementing the device according to one of the previous claims, where the material to be fiberized is emptied into a centrifuge (1) whose peripheral band is perforated with orifices (14) distributed in a plurality of annular zones (ZA) arranged on top of each other with the centrifuge in centrifugation position, **characterized in that** it uses the device according to one of claims 1 to 10.

14. Use of the mineral fibers obtained by the device according to one of claims 1 to 10 and/or by the process according to claim 13 to manufacture thermal and/or acoustic insulation products.
